# EUROPÄISCHE PATENTANMELDUNG

(11) **EP 0 757 263 A1**
(43) Veröffentlichungstag der Anmeldung: **05.02.1997**
(21) Anmeldenummer: 95890145.6
(22) Anmeldetag: 02.08.1995
(51) Int. Cl.: G02B 6/38, G02B 6/36, B24B 19/22, B29D 11/00, G02B 6/40, G09F 9/30

(54) **Faseroptik-Lichtleiterendenausführung**

(71) Anmelder: SWARCO FUTURIT Verkehrssignalsysteme Ges.m.b.H., A-3300 Amstetten (AT)
(72) Erfinder: Silhengst, Franz, A-3004 Ollern (AT); Otto,Alexander,Dipl.-Ing., 2102 Bisamberg (AT)
(74) Vertreter: Patentanwälte BARGER, PISO & PARTNER

(57) **Zusammenfassung**

Anordnung und Ausgestaltung der Endhülsen von vielarmigen Kabellichtleitern in Wechselverkehrszeichen, Anzeigen o.ä. in Blockform, sodaß sie auf einfachste Weise mit Lichtleiterarmen bestückt, gemeinsam optisch bearbeitet, rasch vereinzelt, exakt in den Frontoptiken montiert und ohne Beschädigung wieder demontiert werden können.

Der Endhülsenblock besteht im wesentlichen aus einem stabilen Außenrahmen (1) und stabilen Zwischenstegen (2), entlang derer ein Vielzahl von Endhülsen (3) angeordnet ist. Die Endhülsen sind mit mindestens einer Rippe (4) mit Rahmen (1) oder Zwischensteg (2) verbunden. Jede Rippe weist eine Sollbruchstelle (5) auf, i.a. eine Querschnittsverengung mit scharfen Kanten. Diese ist so dimensioniert, daß alle auftretenden Bearbeitungskräfte übertragen worden. Die Hülsen stehen gegenüber dem Rahmen un den Zwischenstegen um einen geeigneten Betrag (6) vor.

So besitzt jede Endhülse (3) auf ihrem Umfang einen Bund mit einer Montageschräge (7) und einer Demontageschräge (8). An der Vorderseite befindet sich ein kegelförmiger Ansatz (9). Die Bohrung besitzt einen möglichst großen Eintrittsquerschnitt (10), welcher sich bis zum Beginn des Düsenabschnittes (11) etwa den Mantelquerschnitt des Lichtleiterarmes verjüngt. Hinter dem Düsenabschnitt (11) folgt eine zylindrische Bohrung (12) mit einem solchen Querschnitt, daß gerade die optischen Fasern des Armes zu klemmen hineinpassen.

## Beschreibung

Die Erfindung betrifft alle Signal-, Verkehrs- und Anzeigegeräte, welche nach dem Prinzip der Faseroptik arbeiten. Hierbei wird das gebündelte Licht einer oder mehrerer Glühlampen mittels optischer Fasern ("Lichtleiter") auf eine Vielzahl zumeist baugleicher optischer Elemente, auch "Optiken", "Lichtpunkte" oder "Linsen" genannt, aufgeteilt. Diese sind an der Frontseite des Gerätes befestigt und derart angewendet, daß die zu einer Lampe oder Lampengruppe gehörigen Lichtpunkte eine symbolische Darstellung oder alphanumerische Zeichen bilden. Eine hohe Bedeutung für eine möglichst verlustfreie Lichtführung und ein gleichmäßiges Erscheinungsbild kommt hierbei der Endenausführung der eingesetzten Lichtleiter zu. Das gebündelte Licht der Lampe fällt auf den Lichtleitereintritt, die zu einem Bündel zusammengefaßten Arme des Lichtleiters, und wird durch die einzelnen Arme in die Optiken in der Frontplatte geleitet, wo es geformt und abgestrahlt wird. Ein Arm besteht aus vielen hundert haardünnen optisch wirksamen Einzelfasern, welche durch einen gemeinsamen Schutzschlauch bzw. Mantel zusammengehalten werden.

Die Erfindung betrifft nun die Ausbildung der Einzelenden. Die Arme werden üblicherweise mit Endhülsen versehen und verklebt, um die Lichtfasern für die Bearbeitung zu stabilisieren. Die Endhülse übernimmt alle mechanischen Anforderungen. Diese bestehen einmal in einem möglichst einfachen Befestigen der Ader in der Endhülse, wobei sowohl Glasfasern als auch Mantel befestigt werden müssen; weiters in einer möglichst guten Bündelung und Zentrierung der vielen hundert Einzelfasern einer Ader, weil nur dann eine entsprechende Bündelung des Lichts möglich ist; weiters in einer möglichst einfachen Aufnahme beim Schleifen, Polieren und Läppen der Faserenden; weiters in einer möglichst guten, planen, geläppten Oberflächenqualität aller Fasern, um Grenzflächen- und Querschnitts-Lichtverluste zu verhindern; weiters in der Forderung nach einer möglichst einfachen, exakten Befestigung an den Optiken, weil sich jede Toleranz als Lichtverlust oder Änderung des Abstrahlverhaltens äußert; weiters in einer einfachen Lösbarkeit der Ader von der Optik, ohne die Fasern zu beschädigen.

Bisher sind Ausführungen bekannt, wo Metallhülsen unterschiedlichster Bauart und Länge als Endhülsen an die Adernenden in der Regel durch Crimpen befestigt werden. Die Fasern werden anschließend mit Klebstoff getränkt, ausgehärtet, in eine Vorrichtung eingespannt und geschliffen und geläppt. Die Befestigung an der Optik erfolgt durch Schnapphaken, federnde Noppen, Einpressen oder überhaupt unverlierbar durch Kleben oder Einnieten. Weiters sind Ausführungen mit Kunststoff-Endhülsen bekannt, in welche die Adern eingeklebt werden. Die Befestigung an der Optik erfolgt durch elastische Überschub-Hülsen mit Rastlippen.

Ein Nachteil all dieser Ausführungen ist, daß der elastische Adernmantel mitgeschliffen und mitpoliert wird, was die Qualität der Oberflächen beeinträchtigen kann.

Weiters sind Ausführungen bekannt, wo die ungeschützten Glasfasern in eine Metallhülse eingeklebt und erst nachträglich in den schlauchartigen Mantel eingefädelt werden. Die optische Bearbeitung der Enden erfolgt teilweise einzeln, teils werden die Adern mit den Endhülsen in größerer Zahl in eine Aufnahme eingespannt und gemeinsam geschliffen, poliert oder geläppt.

Aufgabenstellung war nun die Entwicklung einer möglichst einfachen, kostengünstigen Methode, die Lichtleiteradern mit Endhülsen zu versehen, die optischen Fasern zu bündeln, die einzelnen Adern gemeinsamn zu bearbeiten und hierbei eine höchstwertige Oberfläche zu erzielen und eine exakte, selbsthaltende Verbindung mit den Optiken, welche wieder gelöst werden kann, zu ermöglichen.

Das wird erfindungsgemäß dadurch gelöst, daß die Endhülsen in Blockanordnung aus Kunststoff gefertigt werden. Sie sind stabil miteinander verbunden und werden erst nach Ende der gemeinsamen Bearbeitung vereinzelt. Die Adern sind eingeklebt.

Der Gegenstand der Erfindung wird beispielsweise in der Zeichnung schematisch dargestellt und anhand dieser näher erläutert.

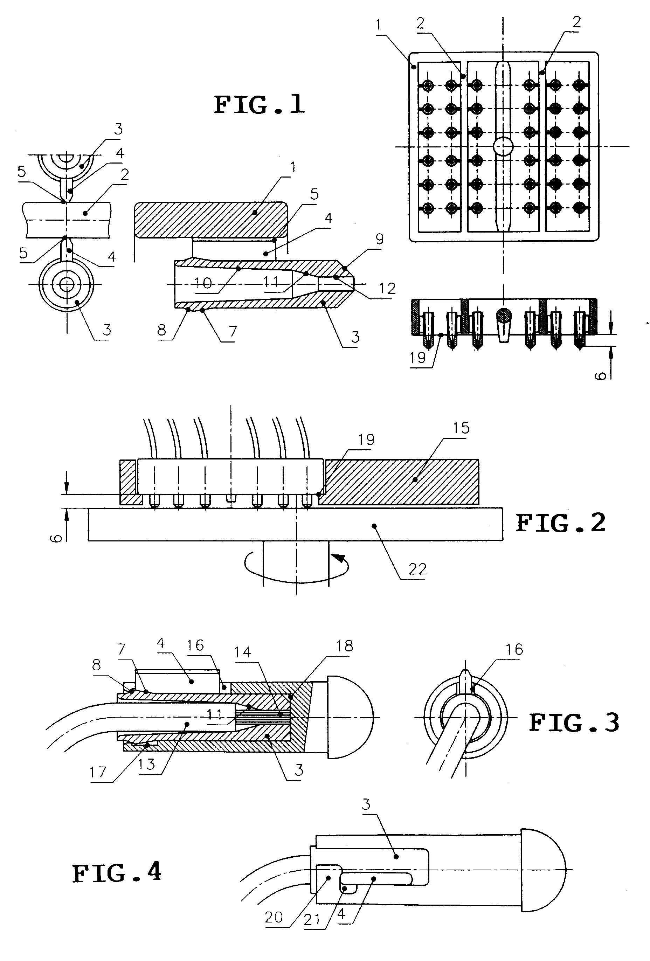

Fig. 1 zeigt eine Ausführungsform der Erfindung vor der Bearbeitung, Fig. 2 die Bearbeitung, Fig. 3 den eingebauten Zustand nach der Vereinzelung und Fig. 4 eine weitere Befestigungsmöglichkeit der Endhülse.

Der Endhülsenblock besteht im wesentlichen aus einem stabilen Außenrahmen 1 und stabilen Zwischenstegen 2, entlang derer eine Vielzahl von Endhülsen 3 angeordnet ist. Die Endhülsen sind mit mindestens einer Rippe 4 mit Rahmen 1 oder Zwischensteg 2 verbunden. Jede Rippe weist eine Sollbruchstelle 5 auf, i.a. eine Querschnittsverengung mit scharfen Kanten. Diese ist so dimensioniert, daß alle auftretenden Bearbeitungskräfte übertragen werden. Die Hülsen stehen gegenüber dem Rahmen und den Zwischenstegen um einen geeigneten Betrag 6 vor.

Durch diese Anordnung entstehen geometrische, formtechnische und bearbeitungstechnische Einschränkungen in der Formgebung der Endhülsen. Die Blockanordnung erfordert daher eine geeignete Befestigungsmethode für die Lichtleiterarme, sowie eine geeignete Befestigungsart an den Optiken.

So besitzt jede Endhülse 3 auf ihrem Umfang einen Bund mit einer Montageschräge 7 und einer Demontageschräge 8. An der Vorderseite befindet sich ein vorzugsweise kegelförmiger Ansatz 9. Die Bohrung besitzt einen möglichst großen Eintrittsquerschnitt 10, welcher sich bis zum Beginn des Düsenabschnittes 11 etwa auf den Mantelquerschnitt des Lichtleiterarmes verjüngt. Hinter dem Düsenabschnitt 11 folgt eine zylindrische Bohrung 12 mit einem solchen Querschnitt, daß gerade die optischen Fasern des Armes ohne zu klemmen hineinpassen. Die inneren Bohrungskanten sind vorzugsweise aus- und abgerundet.

Die Montage der Arme erfolgt, indem zunächst der Mantel der Adern mindestens um die Summe der Längen 11 und 12 gekürzt wird. Nun wird entweder in die Bohrung Klebstoff eingebracht oder das Adernende direkt in Klebstoff getaucht und in die Hülse eingeschoben, bis der Mantel 13 an der Düsenverengung 11 ansteht. Die Düse 11 sorgt hierbei für eine Komprimierung und Zentrierung der optischen Fasern 14. Der Klebstoff verbindet die Fasern mit der Endhülse im Bereich 12, den Mantel mit der Endhülse im Bereich 10 und sorgt so für eine stabile Verbindung, aber auch eine Stabilisierung der Fasern für die nachfolgende Bearbeitung. Ist der Block komplett mit Adern bestückt und der Kleber ausgehärtet, wird der ganze Block in eine entsprechende Aufnahme 15 über dem Schleifteller 22 eingelegt und in mehreren Schritten die Endhülsenenden 9 mit den vorstehenden Fasern gemeinsam plangeschliffen, poliert und geläppt. Hierzu besitzen Rahmen 1 und Zwischenstege 2 eine plane Auflagefläche 19. Nach der Bearbeitung werden die Adern durch einen kräftigen Druck auf die vorstehenden Hülsenenden entlang den Sollbruchstellen 5 herausgebrochen.

Bei der Montage wird die Endhülse in einen passenden Hohlraum der Optik eingeschoben. Dieser ist mit mindestens einem Längsschlitz 16 und einer umlaufenden Nut 17 versehen. Beim Zusammenfügen weitet die Montageschräge 7 die Wandung der Optik elastisch auf, was durch den Längsschlitz 16 besonders erleichtert wird. Die Rippe 4 ist hierbei so zu orientieren, daß sie in den Längsschlitz 16 zu liegen kommt. Wenn die Endposition etwa durch Anlage der Endhülse an der optischen Eintrittsfläche der Optik 18 erreicht ist, rastet der Bund 7 und 8 in die Nut 17 mehr oder weniger vollständig ein, wodurch fertigungsbedingte Längentoleranzen ausgeglichen werden können.

Bei der Demontage wird die Endhülse nicht am Lichtleiter selbst (was eine zerstörende Wirkung für die optischen Fasern haben könnte), sondern an der Rippe 4, welche etwas aus der Optik herausragt, mittels Zange oder Haken angepackt und durch Zurückziehen aus der Nut 17 ausgeschnappt. Die Rückhaltekraft wird hierbei von der Demontageschräge 8 beeinflußt.

Die geschilderte Ausführung liegt wegen der gemeinsamen Bearbeitung im Block im Arbeitsaufwand sehr niedrig. Die Qualität der Bearbeitungsfläche ist hoch, weil kein elastischer Mantel mitpoliert werden muß. Das Abmanteln der Adern kann gleichzeitig mit dem Ablängen durch handelsübliche automatische Maschinen der Kabelkonfektionierung erfolgen. Fügekraft, Positionsgenauigkeit und Lösekraft können durch geeignete Wahl von Position und Neigung der Rampen 7 und 8 wunschgemäß ausgeführt werden. Rahmen und Zwischenstege werden nach dem Vereinzeln regranuliert und wiederverwendet.

Weitere Ausgestaltungsmöglichkeiten sind:

Wird auf die Demontagemöglichkeit verzichtet oder eine andere Möglichkeit des Anfassens beim Ausschnappen gewählt, so kann die Sollbruchstelle 5 der Rippe 4 sich auch unmittelbar am Körper der Endhülse befinden. Weil die Rippe entfernt wird, entfällt die Ausrichtung nach dem Längsschlitz 16.

Die Endhülsen können durch mehrere Rippen 4 mit Sollbruchstelle 5 gehalten werden, wenn die Bearbeitung das nötig macht. Allerdings ist dann auch für mindestens die entsprechende Zahl und Anordnung der Längsschlitze in der Optik zu sorgen.

Fig. 4 zeigt, daß die Rippe 4 auch als Riegel in einer Bajonettbefestigung 20 fungieren kann. In diesem Fall entfallen Bund 7 und 8 und Nut 17. Es sind auch mehrere Riegel denkbar, wobei nur ein Riegel mit Sollbruchstelle der Anbindung an Rahmen und Zwischenstege dienen könnte. Die Bajonettverbindung kann durch eine Nut 21 elastisch gestaltet werden, um Längentoleranzen der Endhülse 3 auszugleichen.

Der Querschnitt der Endhülse muß nicht kreisförmig sein. Es sind auch unrunde oder polygone Querschnitte möglich und sinnvoll, etwa bei nicht kreissymmetrischer Lichtverteilung oder wenn mehrere Endhülsen an eine Optik befestigt werden.

Der Endhülsenblock kann aus transparentem Material gefertigt werden. Das erlaubt eine einfache Sichtkontrolle der Verklebung der Lichtleiterader.

Die Rahmenkontur des Endhülsenblocks ist vorzugsweise ein regelmäßiges Vieleck oder kreisrund. Das erlaubt beliebiges Einsetzen in die Bearbeitungsvorrichtung. Rahmen 1 und Zwischenstege 2 haben vorzugsweise eine plane Auflagefläche 19.

## Patentansprüche

1. Anordnung und Ausgestaltung von Endhülsen für die Befestigung an den Enden der Lichtleiterarme von Kabellichtleitern für Wechselverkehrszeichen, Anzeigen und dergleichen, zur Stabilisierung der Lichtleiterfasern für die optische Bearbeitung und zur Befestigung in den Einzeloptiken der Frontplatte, dadurch gekennzeichnet, daß eine Vielzahl von im wesentlichen zylinderförmigen Endhülsen (3), vorzugsweise innerhalb eines Rahmens (1) und vorzugsweise beidseitig von Zwischenstegen (2) über zumindest eine Rippe (4), welche eine üblicherweise durch scharfkantige Querschnittsänderung erzeugte Sollbruchstelle (5) aufweist, verbunden ist, daß diese einstückige Anordnung vorzugsweise aus transparentem, sprödem Kunststoff in der Regel durch Spritzgießen gefertigt ist, und daß die Endhülsen (3) erst nach der Bestückung mit Lichtleiterarmen und gemeinsamer mechanisch-optischer Bearbeitung der Stirnseiten (9) durch Kraftanwendung an der Sollbruchstelle (5) abgelöst werden.

2. Anordnung nach Anspruch 1, dadurch gekennzeichnet, daß die Endhülsen eine sich allmählich verengende Bohrung aufweiusen, deren der vorzugsweise kegeligen Stirnseite (9) abgewandter, leicht konischer Teil (10) zur Aufnahme des Lichtleitermantels (13) dient, deren düsenartige Verengung (11) als Anschlag für den gekürzten Mantel und zur Zentrierung und Konzentration der Lichtfasern vorgesehen ist und deren anschließender zylindrischer Teil (12) zur fast spielfreien Einfassung und Stabilisierung der Lichtfasern (14) dient, wobei die Hohlräume zwischen Lichtleitermantel, Lichtfasern und Endhülse mit erhärtetem Klebstoff ausgefüllt und so alle Bauteile unlösbar miteinander verbunden sind.

3. Anordnung nach Anspruch 1 und 2, dadurch gekennzeichnet, daß Rahmen (1) und Zwischenstege (2) eine plane Auflagefläche (19) zur Bearbeitung aufweisen, daß die Endhülsen über diese Auflagefläche (19) vorstehen und durch die mechanischoptische Bearbeitung zusammen mit den Lichtfasern (14) auf ein einheitliches Maß (6) abgearbeitet werden.

4. Anordnung nach Anspruch 1, 2 und 3, dadurch gekennzeichnet, daß die Endhülsen am Außenumfang einen Bund mit einer Montageschräge (7) und einer Demontageschräge (8) aufweisen, mit welchem sie bei der Befestigung an der Optik in eine umlaufende Nut (17) ein- und ausrasten können, wogbei die Neigung der Montageschräge die Fügekraft, die Neigung der Demontageschräge die Trenn- bzw. Haltekraft beeinflußt.

5. Anordnung nach Anspruch 1 bis 4, dadurch gekennzeichnet, daß bei montierten Endhülsen die Rippen (4) sich vorzugsweise in Längsschlitzen (16) der Optik befinden, welche die Aufweitung beim Einschnappen des Bundes (7 und 8) erleichtern und so gestaltet sind, daß sie durch das Optikgehäuse herausragen und als Anfasser zur Demontage dienen.

6. Anordnung nach Anspruch 1 bis 3, dadurch gekennzeichnet, daß die Rippen (4) der Endhülsen (3) als Riegel einer in die Optik integrierten Bajonettverbindung (20) fungieren.

7. Anordnung nach einem oder mehreren Ansprüchen 1 bis 6, dadurch gekennzeichnet, daß sich die Sollbruchstelle (5) zwischen Rippe (4) und Endhülse befindet und die Endhülse daher nach dem Ablösen keine Rippen aufweist.

8. Anordnung nach einem doer mehreren ANsprüchen 1 bis 7, dadurch gekennzeichnet, daß die Rippen (4) keine Sollbruchstellen aufweisen und die Abtrennung der Endhülsen auf andere Weise, z.B. durch Scheren, Sägen, Schneiden oder Schmelzen erfolgt.

9. Anordnung nach einem oder mehreren Ansprüchen 1 bis 8, dadurch gekennzeichnet, daß der Querschnitt der Endhülsen (3), wie auch der Bohrung nicht nur kreisförmige, sondern auch eine unrunde, polygonale oder andere beliebige Gestalt haben kann.
